# EUROPEAN PATENT SPECIFICATION

(11) **EP 3 067 241 B1**
(45) Date of publication and mention of the grant of the patent: **07.11.2018**
(21) Application number: 15158466.1
(22) Date of filing: 10.03.2015
(51) Int. Cl.: B60R 21/0136, B60R 19/48

(54) **A vehicle impact sensor arrangement**
Fahrzeugaufprallsensoranordnung
Ensemble capteur d'impact de véhicule

(43) Date of publication of application: 14.09.2016
(73) Proprietor: Veoneer Sweden AB, 447 83 Vårgårda (SE)
(72) Inventor: Höfelsauer, Herbert, 81667 München (DE)
(74) Representative: Sandstedt, Jonas Sven James

(56) References cited:
- EP-A1- 3 006 274
- WO-A1-2012/113362
- WO-A1-2016/006195
- DE-A1-102005 005 881
- DE-A1-102005 021 282
- DE-A1-102006 050 098

## Description

### TECHNICAL FIELD

The present disclosure relates to a vehicle impact sensor arrangement adapted to detect a front impact between a vehicle and a pedestrian or an object. The sensor arrangement comprises a vehicle bumper absorbing material with a channel and a vehicle bumper beam which have a respective longitudinal extension that mainly extends across the forward direction of movement. The sensor arrangement further comprises at least one air pressure sensor that is arranged to detect air pressure in the channel.

Vehicle manufacturers are faced with the task of providing pedestrian protection, such that pedestrians who are hit by a vehicle in the event of an accident suffer as little injuries as possible. It has been observed that if a motor vehicle hits a pedestrian, the bumper of the vehicle often hits the legs or lower torso of the pedestrian. Hence, the legs of the pedestrian will normally be pushed in the travel direction of the vehicle, and the head and upper torso will normally be tilted towards the hood and windscreen of the vehicle. This tilting movement often causes the head or upper torso of the pedestrian to first make contact with the hood and thereafter, if the impact force from the hit is strong enough and the vehicle continues forward, also reach the windscreen.

The engine hood has been suited to absorb the collision force acting on a pedestrian, but due to a quite small clearance distance between the mostly very hard engine compartment equipment and the hood, the deformation path of the hood is limited. This means that a pedestrian that is hit by a vehicle and who strikes the hood, probably will be injured by the underlying cylinder head or some other heavy, non-resilient structure under the hood.

In order to counteract this, vehicle hoods have been developed such that, in the event of a frontal accident involving a pedestrian, they are moved from a normal position to a raised position. The hood is then raised approximately 10 cm to 15 cm, normally at the rear end of the hood, such that the hood in its raised position has an inclination that decreases from the vehicle windscreen towards the front of the vehicle. This inclination also serves to guide the pedestrian towards the windscreen, which has been found to provide good absorption of collision forces. Hood lifting arrangements are for example disclosed in WO 2007/067 121 and EP 2 256 007.

In order to achieve such a raising of the engine hood, it is necessary to provide sensors that quickly and reliably detect a pedestrian and a fast-acting hood raising, normally driven by a pyrotechnical charge.

Sensors that have been used previously have been based on pressure change in an enclosed air-tight chamber space behind a front bumper of a vehicle, as described in US 7828350. Here it is described how it may be detected if the chamber space is not air-tight any more; for example due to a leakage. However, such a detection apparatus is more or less complicated, adds production cost, and may also suffer from failure.

DE 10 2006 050098 discloses compressible tubes that are positioned between a bumper shock absorber and a reinforcing element, where airflow sensors are attached to the ends of tubes.

WO2012113362 disclosing an impact sensor arrangement according to the preamble of claim 1 also discloses compressible tubes used for collision detection by means of air pressure sensors. The disclosure relates to tube diameters suitable for use in collision detection.

It is therefore the object of the present disclosure to provide a sensor system for detecting a pedestrian collision in the front region of a motor vehicle that is reliable and uncomplicated.

This object is achieved by means of a vehicle impact sensor arrangement adapted to detect an impact situation at a vehicle that has a forward direction of movement. The sensor arrangement comprises a vehicle bumper beam and a vehicle bumper absorbing material with a channel, which all have a respective longitudinal extension that mainly extends across the forward direction of movement. The sensor arrangement further comprises at least one air pressure sensor that is arranged to detect air pressure in the channel. When struck by an object that at least partly compresses the channel, the channel is arranged to confer an air pressure detected by said air pressure sensor that first increases from an initial air pressure to a maximum air pressure, then decreases, falling below the initial air pressure to a minimum air pressure before increasing again. This is due to at least one air passage formed between the channel and ambient air.

This object is also achieved by means of a method for detecting an impact situation at a vehicle, where the method comprises:
- detecting air pressure in a channel at least partly formed in a vehicle bumper absorbing material, and
- determining that an impact situation has occurred when the detected air pressure first increases from an initial air pressure to a maximum air pressure, then decreases, falling below the initial air pressure to a minimum air pressure before increasing again. This is due to at least one air passage formed between the channel and ambient air.

According to an example, the sensor arrangement is arranged to at least detect a collision between the vehicle and a pedestrian.

According to another example, said air passage is arranged to enable a fluid connection between air in the channel and ambient air.

According to another example, the sensor arrangement comprises a control unit that is arranged to receive data from said air pressure sensor and to use the received data for determining whether an impact situation has occurred.

According to another example, the control unit is arranged to determine impact situation characteristics by means of pressure characteristics versus time of the detected air pressure.

According to another example, the absorbing material is mounted against the vehicle bumper beam, where a separate lid part that extends along said longitudinal extension closes the channel. Alternatively, the absorbing material is mounted against the vehicle bumper beam such that the vehicle bumper beam closes the channel.

According to another example, the absorbing material is formed by a first part and a second part, where these parts are joined together such that the channel is formed inside them.

A number of advantages are provided by means of the present disclosure. For example:
- High reliability;
- Inexpensive;
- No need for monitoring and/or diagnosis arrangements;
- Uncomplicated installation; and
- Robustness to environmental conditions.

### BRIEF DESCRIPTION OF THE DRAWINGS

The present disclosure will now be described more in detail with reference to the appended drawings, where:
- Figure 1: shows a schematic side view of a vehicle before activation of a hood lifting actuator;
- Figure 2: shows a schematic side view of a vehicle after activation of a hood lifting actuator;
- Figure 3: shows a schematic exploded top view of a vehicle bumper according to the present disclosure;
- Figure 4: shows a schematic top view of assembled parts of a vehicle bumper according to the present disclosure;
- Figure 5: shows a graphical representation of detected pressure versus time during an impact;
- Figure 6: shows a first example of a schematic section of Figure 4;
- Figure 7: shows a second example of a schematic section of Figure 4;
- Figure 8: shows a third example of a schematic section of Figure 4;
- Figure 9: shows a schematic cut-open view of a first end of an absorbing material comprised in the bumper; and
- Figure 10: shows a flowchart for a method according to the present ignition.

### DETAILED DESCRIPTION

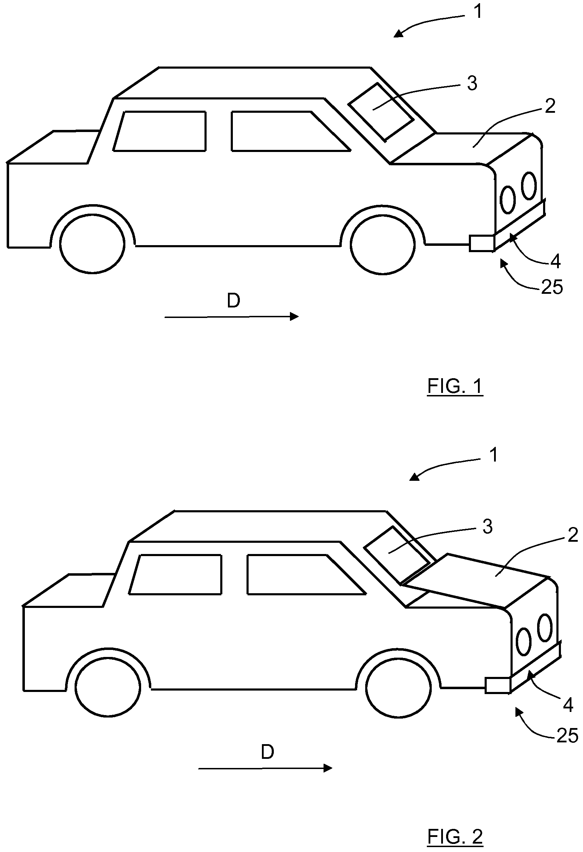

Figure 1 shows a vehicle 1 with a hood 2 and a windscreen 3 in a normal condition. The vehicle 1 has a forward direction of movement that is indicated with an arrow D. In the event of a collision with a pedestrian (not shown), the rear part of the hood 2, i.e. the part closest to the windscreen, is raised as shown in Figure 2. The vehicle comprises a front bumper 4, arranged at the lower front of the vehicle 1, where the front bumper 4 comprises a vehicle impact sensor arrangement 25.

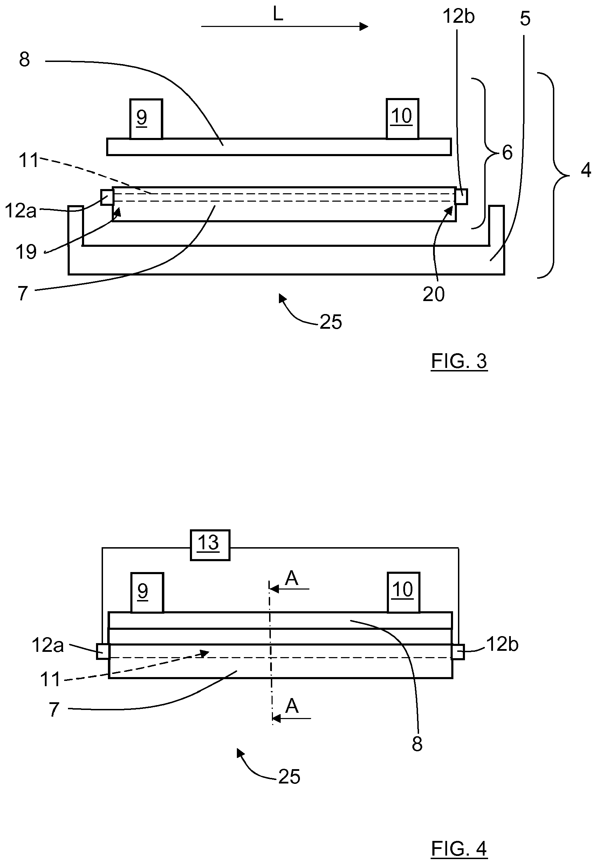

With reference to Figure 3 and Figure 4, the bumper 4 comprises a bumper cover 5 and a bumper body 6, the bumper body 6 being constituted by a layer of absorbing material 7, such as foam, a metal beam 8 and so-called crash boxes 9, 10, the latter being mounted to the vehicle chassis. The bumper cover 5, the absorbing material 7 and the metal beam 8 all have a main longitudinal extension L that is perpendicular to the forward direction of movement D.

Figure 3 shows the different parts mentioned above, and Figure 4 shows them assembled, except the bumper cover 5 and the crash boxes 9, 10. The absorbing material 7 has a first end 19 and a second end 20 along its longitudinal extension.

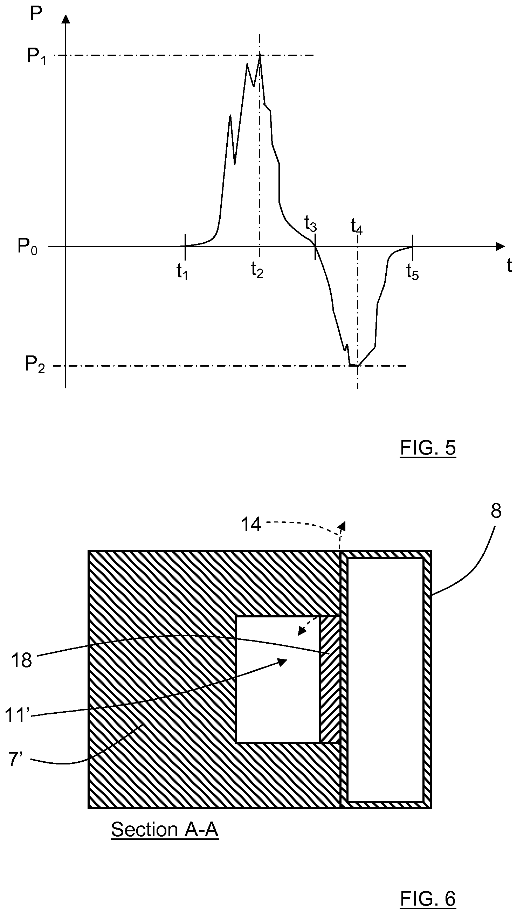

The absorbing material 7 comprises a channel 11 formed in the absorbing material 7, the channel 11 running between the first end 19 and a second end 20. At each end of said ends 19, 20, there is a corresponding first air pressure sensor 12a and second air pressure sensor 12b that normally detect an air pressure having an initial air pressure magnitude P₀ as indicated in Figure 5 that shows a graphical representation of detected pressure P versus time t.

With reference to Figure 3, Figure 4 and Figure 5, the bumper cover 5 is displaceable and deformable towards the bumper body 6 such that the absorbing material 7 is pressed against the metal beam 8. In the event of a collision, for example with a pedestrian, the channel (11) is least partly compressed resulting in that the air pressure in the channel 11 increases rapidly from the initial air pressure P₀, which is detected by the air pressure sensors 12a, 12b.

According to the present disclosure, with reference also to Figure 6 that shows a section of Figure 4, after a detected maximum air pressure P₁ in the now deformed channel 11, the pressure in the channel 11 decreases when the channel strives to retain its initial shape. Since air has been pressed out of the channel 11 via air passages 14 that connect the channel 11 with surrounding air during the impact and the deformation of the channel 11, air now flows back into the channel 11 via these air passages 14. As a consequence of this, an air pressure that falls below the initial air pressure P₀ occurs until a minimum air pressure P₂ in the channel 11 is reached before the air pressure returns to the initial air pressure P₀.

In Figure 5, the detected pressure in the channel 11 starts to rise from the initial air pressure P₀ at a first time t₁ reaches the maximum air pressure P₁ at a second time t₂, falls to the initial air pressure P₀ at a third time t₃, fall further and reaches the minimum air pressure P₂ at a fourth time t₄ and then rises again and stabilizes at the initial air pressure P₀ at a fifth time t₅.

An electronic control unit 13 is arranged to receive data from the air pressure sensors 12a, 12b and to use the data for determining that a collision, for example with a pedestrian, has occurred. If it is determined that a collision has occurred, the control unit 13 is arranged to activate at least one protective device such as for example a hood lifter and/or windscreen airbags (not shown).

By means of having a channel that comprises air passages 14, the detected pressure should fall below the initial air pressure P₀ when an impact occurs. By means of already having air passages, there is no use keeping track of possible leakage since a more or less known leakage already exists, and that its effects are taken into account when analysing the measurement results, no special test, monitoring or diagnosis arrangements are needed. Furthermore, no adjustments are necessary for compensating pressure differences of ambient air, for example due to the vehicle travelling at different heights over the sea. All this is taken care of automatically in an uncomplicated manner.

Depending on the number of air passages and their sizes, together providing a total air passage area, the times and pressures in Figure 5 may vary. If for example the total air passage area is increased, the both the maximum air pressure P₁ and the minimum air pressure P₂ will decrease. Correspondingly, if the total air passage area is decreased, the both the maximum air pressure P₁ and the minimum air pressure P₂ will increase. By taking these effects into account, manufacturing and mounting tolerances may be compensated.

It is to be noted that Figure 4 depicts the channel 11 in the absorbing material 7, but not any specific arrangement placed in the channel 11, such as different placements of sensor and channel configurations. Figure 4 is therefore to be regarded as a generic drawing which is used for illustrating several embodiment examples in the following with corresponding references to Figure 6, Figure 7 and Figure 8 which all show a sectional view of Figure 4.

With reference to Figure 4 and Figure 6, the absorbing material 7' is mounted against the metal beam 8, and a separate lid part 18 that extends along the main longitudinal extension L closes the channel 11'. Air may here flow via air passages 14 formed between the lid part 18 and the rest of the absorbing material 7', such that the channel 11' may be connected with surrounding air.

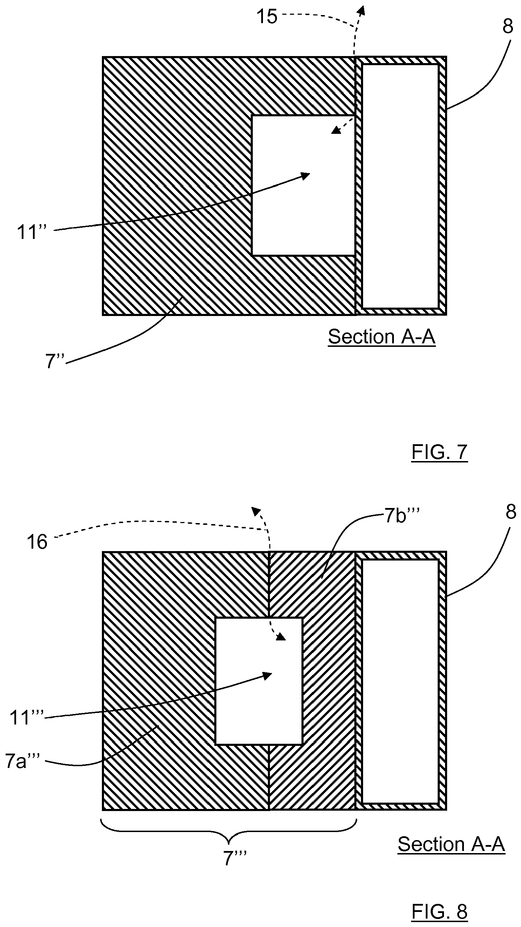

With reference to Figure 4 and Figure 7, the absorbing material 7" is mounted against the metal beam 8 such that the metal beam 8 closes the channel 11". Air may here flow via air passages 15 formed between the metal beam 8 and the rest of the absorbing material 7", such that the channel 11" may be connected with surrounding air.

With reference to Figure 4 and Figure 8, the absorbing material 7"' is formed by a first part 7a"' and a second part 7b"', where these parts 7a"', 7b"' are joined together such that the channel 11"' is formed inside the parts 7a"', 7b"'. Air may here flow via air passages 16 formed between these parts 7a"', 7b"', such that the channel 11"' may be connected with surrounding air.

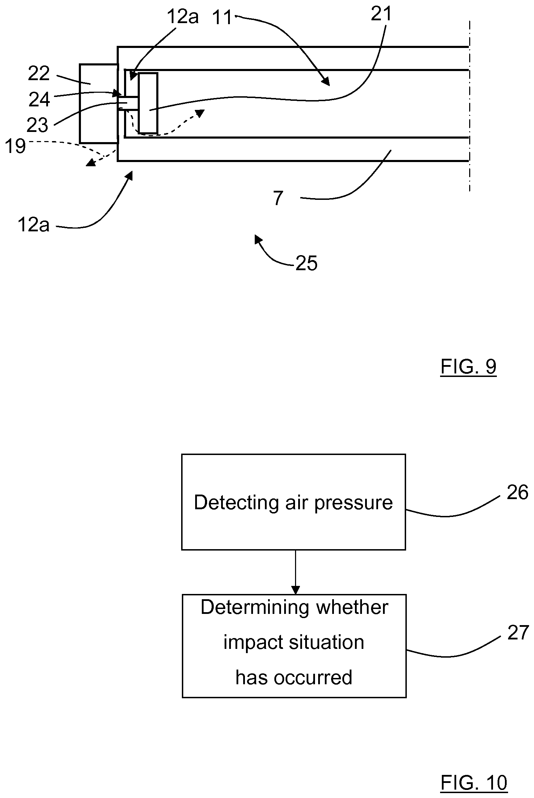

Figure 9 shows a cut-open view of the first end 19 of the absorbing material 7 and the corresponding first air pressure sensor 12a. The first air pressure sensor 12a comprises a sensor piston plate 21, a sensor housing 22 and a connecting rod 23 that connects the sensor piston plate 21 and the sensor housing 22, running via an opening 24 in the absorbing material 7. Air may here flow via formed between the sensor piston plate 21, the sensor housing 22, the connecting rod 23 and the adjacent absorbing material 7, such that the channel 11 may be connected with surrounding air.

In the above examples, examples of air passages 14, 15, 16, 17 have been presented, only one air passage being indicated with a corresponding dashed double-headed arrow. For each example there are of course many air passaged although only one is indicated, and several many other air passages may of course exist. The air passages may be provided more or less deliberately, but should be present such that the detected air pressure falls below the initial air pressure P₀.

With reference to Figure 10, the present disclosure also relates to a method for detecting an impact situation, where the method comprises:
26: Detecting air pressure in a channel 11 at least partly formed in a vehicle bumper absorbing material 7.
27: Determining that an impact situation has occurred when the detected air pressure first increases from an initial air pressure P₀ to a maximum air pressure P₁, then decreases, falling below the initial air pressure P₀ to a minimum air pressure P₂ before increasing again, due to at least one air passage 14, 15, 16, 17 formed between the channel 11 and ambient air.

The present disclosure is not limited to the examples above, but may vary freely within the scope of the dependent claims. For example, the bumper cover 5, the absorbing material 7 and the metal beam 8 may have slightly bent and/or rounded shapes, but have a respective longitudinal extension L that mainly extends across the forward direction of movement D.

The metal beam 8 is generally constituted by a vehicle bumper beam 8, which may be made in any suitable material, depending on the desired functionality.

The absorbing material 7 may be constituted by any suitable foam or rubber compound, and may comprise one or more cavities or walls. The bumper cover 5 may be integrated with the absorbing material 7.

The air passages 14, 15, 16, 17 may form connections that always are open such that there always exists a fluid connection between air in the channel 11 and ambient air. Alternatively, the connection may open only during stress such as during impact.

Collisions with other objects than pedestrians may also be detected, such as for example collisions with fixed objects and other vehicles. From the detected air pressure characteristics it is possible to conclude what kind of collision that has occurred since the control unit 13 is arranged to determine impact situation characteristics by means of pressure characteristics versus time of the detected air pressure. Such impact situation characteristics may for example comprise type of object with which a collision or impact situation has occurred.

If it is determined that a collision has occurred with a fixed object or another vehicle, the control unit 13 may be arranged to activate at least one protective device for vehicle occupants such as for example emergency braking arrangements, interior airbags and seatbelt pre-tensioning devices. All collisions are generally referred to as impact situations.

The number of air pressure sensors, their construction and placement may vary, but the vehicle impact sensor arrangement 25 should comprise at least one air pressure sensor. The pressure sensor described with reference to Figure 9 is only one example of one type of pressure sensor; many other types of pressure sensors of course exist and are well-known in the art, such as for example pressure sensors of membrane type.

The present disclosure relates to a vehicle impact sensor arrangement 25 adapted to detect an impact situation at a vehicle 1, the vehicle 1 having a forward direction of movement D, the sensor arrangement 25 comprising a vehicle bumper beam 8 and a vehicle bumper absorbing material 7 with a channel 11, which all have a respective longitudinal extension L that mainly extends across the forward direction of movement D, the sensor arrangement 25 further comprising at least one air pressure sensor 12a, 12b that is arranged to detect air pressure in the channel 11. When struck by an object that at least partly compresses the channel 11, the channel 11 is arranged to confer an air pressure detected by said air pressure sensor 12a, 12b that first increases from an initial air pressure P₀ to a maximum air pressure P₁, then decreases, falling below the initial air pressure P₀ to a minimum air pressure P₂ before increasing again, due to at least one air passage 14, 15, 16, 17 formed between the channel 11 and ambient air.

According to an example, the sensor arrangement 25 is arranged to at least detect a collision between the vehicle 1 and a pedestrian.

According to an example, said air passage 14, 15, 16, 17 is arranged to enable a fluid connection between air in the channel 11 and ambient air.

According to an example, the sensor arrangement 25 comprises a control unit 13 that is arranged to receive data from said air pressure sensor 12a, 12b and to use the received data for determining whether an impact situation has occurred.

According to an example, if it is determined that an impact situation has occurred, the control unit 13 is arranged to activate at least one protective device.

According to an example, the control unit 13 is arranged to determine impact situation characteristics by means of pressure characteristics versus time of the detected air pressure.

According to an example, said impact situation characteristics comprise type of object with which an impact situation has occurred.

According to an example, the absorbing material 7' is mounted against the vehicle bumper beam 8, where a separate lid part 18 that extends along said longitudinal extension L closes the channel 11'.

According to an example, the absorbing material 7" is mounted against the vehicle bumper beam 8 such that the vehicle bumper beam 8 closes the channel 11".

According to an example, the absorbing material 7"' is formed by a first part 7a"' and a second part 7b"', where these parts 7a"', 7b"' are joined together such that the channel 11"' is formed inside the parts 7a"', 7b"'.

The present disclosure also relates to a method for detecting an impact situation at a vehicle 1, where the method comprises:
26: detecting air pressure in a channel 11 at least partly formed in a vehicle bumper absorbing material 7; and
27: determining that an impact situation has occurred when the detected air pressure first increases from an initial air pressure P₀ to a maximum air pressure P₁, then decreases, falling below the initial air pressure P₀ to a minimum air pressure P₂ before increasing again, due to at least one air passage 14, 15, 16, 17 formed between the channel 11 and ambient air.

According to an example, the method comprises activating at least one protective device in the vehicle 1.

According to an example, the method comprises determining impact situation characteristics using pressure characteristics versus time of the detected air pressure.

According to an example, said impact situation characteristics comprise type of object with which an impact situation has occurred.

## Claims

1. A vehicle impact sensor arrangement (25) adapted to detect an impact situation at a vehicle (1), the vehicle (1) having a forward direction of movement (D), the sensor arrangement (25) comprising a vehicle bumper beam (8) and a vehicle bumper absorbing material (7) with a channel (11), which all have a respective longitudinal extension (L) that mainly extends across the forward direction of movement (D), the sensor arrangement (25) further comprising at least one air pressure sensor (12a, 12b) that is arranged to detect air pressure in the channel (11), **characterized in that** that when struck by an object that at least partly compresses the channel (11), the channel (11) is arranged to confer an air pressure detected by said air pressure sensor (12a, 12b) that first increases from an initial air pressure (P₀) to a maximum air pressure (P₁), then decreases, falling below the initial air pressure (P₀) to a minimum air pressure (P₂) before increasing again, due to at least one air passage (14, 15, 16, 17) formed between the channel (11) and ambient air.

2. A vehicle impact sensor arrangement (25) according to claim 1, **characterized in that** the sensor arrangement (25) is arranged to at least detect a collision between the vehicle (1) and a pedestrian.

3. A vehicle impact sensor arrangement (25) according to any one of the claims 1 or 2, **characterized in that** said air passage (14, 15, 16, 17) is arranged to enable a fluid connection between air in the channel (11) and ambient air.

4. A vehicle impact sensor arrangement (25) according to any one of the previous claims, **characterized in that** the sensor arrangement (25) comprises a control unit (13) that is arranged to receive data from said air pressure sensor (12a, 12b) and to use the received data for determining whether an impact situation has occurred.

5. A vehicle impact sensor arrangement (25) according to claim 4, **characterized in that** if it is determined that an impact situation has occurred, the control unit 13 is arranged to activate at least one protective device.

6. A vehicle impact sensor arrangement (25) according to any one of the claims 4 or 5, **characterized in that** the control unit (13) is arranged to determine impact situation characteristics by means of pressure characteristics versus time of the detected air pressure.

7. A vehicle impact sensor arrangement (25) according to claim 6, **characterized in that** said impact situation characteristics comprises type of object with which an impact situation has occurred.

8. A vehicle impact sensor arrangement (25) according to any one of the previous claims, **characterized in that** the absorbing material (7') is mounted against the vehicle bumper beam (8), where a separate lid part (18) that extends along said longitudinal extension (L) closes the channel (11').

9. A vehicle impact sensor arrangement (25) according to any one of the claims 1-7, **characterized in that** the absorbing material (7") is mounted against the vehicle bumper beam (8) such that the vehicle bumper beam (8) closes the channel (11").

10. A vehicle impact sensor arrangement (25) according to any one of the claims 1-7, **characterized in that** the absorbing material (7"') is formed by a first part (7a"') and a second part (7b"'), where these parts (7a"', 7b"') are joined together such that the channel (11"') is formed inside the parts (7a"', 7b"').

11. A method for detecting an impact situation at a vehicle (1), where the method comprises:
(26) detecting air pressure in a channel (11) at least partly formed in a vehicle bumper absorbing material (7); **characterized in that** the method further comprises:
(27) determining that an impact situation has occurred when the detected air pressure first increases from an initial air pressure (P₀) to a maximum air pressure (P₁), then decreases, falling below the initial air pressure (P₀) to a minimum air pressure (P₂) before increasing again, due to at least one air passage (14, 15, 16, 17) formed between the channel (11) and ambient air.

12. A method according to claim 11, **characterized in that** the method comprises activating at least one protective device in the vehicle (1).

13. A method according to any one of the claims 11-12 **characterized in that** the method comprises determining impact situation characteristics using pressure characteristics versus time of the detected air pressure.

14. A method according to claim 13, **characterized in that** said impact situation characteristics comprise type of object with which an impact situation has occurred.

## Patentansprüche

1. Fahrzeug-Aufprallsensor-Anordnung (25), geeignet, eine Aufprallsituation an einem Fahrzeug (1) zu detektieren, wobei das Fahrzeug (1) eine Vorwärtsbewegungsrichtung (D) aufweist, wobei die Sensor-Anordnung (25) einen Fahrzeug-Stoßstangenträger (8) und ein absorbierendes Fahrzeug-Stoßstangenmaterial (7) mit einem Kanal (11) umfasst, die alle eine entsprechende Längenausdehnung (L) aufweisen, die sich im Wesentlichen quer zur Vorwärtsbewegungsrichtung (D) erstreckt, wobei die Sensor-Anordnung (25) ferner mindestens einen Luftdrucksensor (12a, 12b) umfasst, der so gestaltet ist, dass er den Luftdruck in dem Kanal (11) detektiert, **dadurch gekennzeichnet, dass** bei Aufprall durch ein Objekt, das den Kanal (11) mindestens teilweise komprimiert, der Kanal (11) so gestaltet ist, dass er einen Luftdruck, der von dem Luftdrucksensor (12a, 12b) detektiert wird, der zuerst von einem Ausgangsluftdruck (P₀) auf einen Maximalluftdruck (Pᵢ) ansteigt, dann unter den Ausgangsluftdruck (P₀) auf einen Minimalluftdruck (P₂) abfällt, bevor er erneut ansteigt, aufgrund mindestens eines Luftdurchgangs (14, 15, 16, 17), der zwischen dem Kanal (11) und der Umgebungsluft ausgebildet ist, überträgt.

2. Fahrzeug-Aufprallsensor-Anordnung (25) nach Anspruch 1, **dadurch gekennzeichnet, dass** die Sensor-Anordnung (25) so gestaltet ist, dass sie mindestens eine Kollision zwischen dem Fahrzeug (1) und einem Fußgänger erkennt.

3. Fahrzeug-Aufprallsensor-Anordnung (25) nach einem der Ansprüche 1 bis 2, **dadurch gekennzeichnet, dass** der Luftdurchgang (14, 15, 16, 17) so gestaltet ist, dass er eine fluide Verbindung zwischen der Luft in dem Kanal (11) und der Umgebungsluft ermöglicht.

4. Fahrzeug-Aufprallsensor-Anordnung (25) nach einem der vorangehenden Ansprüche, **dadurch gekennzeichnet, dass** die Sensor-Anordnung (25) eine Steuereinheit (13) umfasst, die so gestaltet ist, dass sie Daten von dem Luftdrucksensor (12a, 12b) empfängt und die empfangenen Daten zur Bestimmung verwendet, ob eine Aufprallsituation eingetreten ist.

5. Fahrzeug-Aufprallsensor-Anordnung (25) nach Anspruch 4, **dadurch gekennzeichnet, dass** die Steuereinheit 13 so gestaltet ist, dass sie bei Bestimmung, dass eine Aufprallsituation eingetreten ist, mindestens eine Schutzvorrichtung aktiviert.

6. Fahrzeug-Aufprallsensor-Anordnung (25) nach einem der Ansprüche 4 bis 5, **dadurch gekennzeichnet, dass** die Steuereinheit (13) so gestaltet ist, dass sie eine Aufprallsituation-Charakteristik mittels Druckcharakteristik in Abhängigkeit von der Zeit des detektierten Luftdrucks bestimmt.

7. Fahrzeug-Aufprallsensor-Anordnung (25) nach Anspruch 6, **dadurch gekennzeichnet, dass** die Aufprallsituation-Charakteristik einen Objekttyp umfasst, mit dem eine Aufprallsituation eingetreten ist.

8. Fahrzeug-Aufprallsensor-Anordnung (25) nach einem der vorangehenden Ansprüche, **dadurch gekennzeichnet, dass** das absorbierende Material (7') an dem Fahrzeug-Stoßstangenträger (8) montiert ist, wobei ein gesondertes Klappenteil (18), das sich längs der Längenausdehnung (L) erstreckt, den Kanal (11') schließt.

9. Fahrzeug-Aufprallsensor-Anordnung (25) nach einem der Ansprüche 1 bis 7, **dadurch gekennzeichnet, dass** das absorbierende Material (7") an dem Fahrzeug-Stoßstangenträger (8) montiert ist, so dass der Fahrzeug-Stoßstangenträger (8) den Kanal (11") schließt.

10. Fahrzeug-Aufprallsensor-Anordnung (25) nach einem der Ansprüche 1 bis 7, **dadurch gekennzeichnet, dass** das absorbierende Material (7"') durch ein erstes Teil (7a"') und ein zweites Teil (7b"') gebildet wird, wobei diese Teile (7a"', 7b"') miteinander verbunden sind, so dass der Kanal (11"') in den Teilen (7a"', 7b"') gebildet wird.

11. Verfahren zum Detektieren einer Aufprallsituation an einem Fahrzeug (1), wobei das Verfahren Folgendes umfasst:
(26) Detektieren eines Luftdrucks in einem Kanal (11), der mindestens teilweise in einem absorbierenden Fahrzeug-Stoßstangenmaterial (7) gebildet wird, **dadurch gekennzeichnet, dass** das Verfahren ferner Folgendes umfasst:
(27) Bestimmen, dass eine Aufprallsituation eingetreten ist, wenn der detektierte Luftdruck zuerst von einem Ausgangsluftdruck (P₀) auf einen Maximalluftdruck (Pᵢ) ansteigt, dann unter den Ausgangsluftdruck (P₀) auf einen Minimalluftdruck (P₂) abfällt, bevor er erneut ansteigt, aufgrund mindestens eines Luftdurchgangs (14, 15, 16, 17), der zwischen dem Kanal (11) und der Umgebungsluft ausgebildet ist.

12. Verfahren nach Anspruch 11, **dadurch gekennzeichnet, dass** das Verfahren das Aktivieren mindestens einer Schutzvorrichtung in dem Fahrzeug (1) umfasst.

13. Verfahren nach einem der Ansprüche 11 bis 12, **dadurch gekennzeichnet, dass** das Verfahren das Bestimmen einer Aufprallsituation-Charakteristik unter Verwendung einer Druckcharakteristik in Abhängigkeit von der Zeit des detektierten Luftdrucks umfasst.

14. Verfahren nach Anspruch 13, **dadurch gekennzeichnet, dass** die Aufprallsituation-Charakteristik einen Objekttyp umfasst, mit dem eine Aufprallsituation eingetreten ist.

## Revendications

1. Ensemble de capteur de choc (25) de véhicule conçu pour détecter une situation de choc au niveau d'un véhicule (1), le véhicule (1) ayant une direction de mouvement (D) vers l'avant, l'ensemble de capteur (25) comprenant une poutre (8) de pare-chocs de véhicule et un matériau absorbant (7) de pare-chocs de véhicule avec un conduit (11), tous ces éléments comprenant une extension longitudinale respective (L) qui s'étend principalement dans la direction du mouvement (D) vers l'avant, l'ensemble de capteur (25) comprenant en outre au moins un capteur de pression d'air (12a, 12b) qui est conçu pour détecter la pression de l'air dans le conduit (11), **caractérisé en ce que,** lorsqu'il est heurté par un objet qui comprime au moins partiellement le conduit (11), le conduit (11) est conçu pour conférer une pression d'air détectée par ledit capteur d'air (12a, 12b) qui augmente en premier lieu entre une pression d'air initiale (P₀) et une pression d'air maximale (P₁), puis diminue, tombant en dessous de la pression d'air initiale (P₀) jusqu'à une pression d'air minimale (P₂) avant d'augmenter à nouveau, par le fait d'au moins un passage d'air (14, 15, 16, 17) formé entre le conduit (11) et l'air ambiant.

2. Ensemble de capteur de choc (25) de véhicule selon la revendication 1, **caractérisé en ce que** l'ensemble de capteur (25) est conçu pour au moins détecter une collision entre le véhicule (1) et un piéton.

3. Ensemble de capteur de choc (25) de véhicule selon l'une quelconque des revendications 1 et 2, **caractérisé en ce que** ledit passage d'air (14, 15, 16, 17) est conçu pour permettre une connexion fluidique entre l'air dans le conduit (11) et l'air ambiant.

4. Ensemble de capteur de choc (25) de véhicule selon l'une quelconque des revendications précédentes, **caractérisé en ce que** cet ensemble de capteur (25) comprend une unité de commande (13) qui est conçue pour recevoir des données provenant dudit capteur de pression d'air (12a, 12b) et pour utiliser les données reçues afin de déterminer si une situation de choc s'est produite.

5. Ensemble de capteur de choc (25) de véhicule selon la revendication 4, **caractérisé en ce que,** s'il est déterminé qu'une situation de choc s'est produite, l'unité de commande 13 est conçue pour activer au moins un ensemble de protection.

6. Ensemble de capteur de choc (25) de véhicule selon l'une quelconque des revendications 4 et 5, **caractérisé en ce que** l'unité de commande (13) est conçue pour déterminer des caractéristiques de situation de choc au moyen de caractéristiques de pression en fonction du temps de la pression d'air détectée.

7. Ensemble de capteur de choc (25) de véhicule selon la revendication 6, **caractérisé en ce que** lesdites caractéristiques de situation de choc comprennent le type d'objet avec lequel la situation de choc s'est produite.

8. Ensemble de capteur de choc (25) de véhicule selon l'une quelconque des revendications précédentes, **caractérisé en ce que** le matériau absorbant (7') est monté contre la poutre de pare-chocs (8) du véhicule, une partie de couvercle (18) séparée qui s'étend le long de ladite extension longitudinale (L) fermant le conduit (11').

9. Ensemble de capteur de choc (25) de véhicule selon l'une quelconque des revendications 1 à 7, **caractérisé en ce que** le matériau absorbant (7") est monté contre la poutre (8) de pare-chocs du véhicule, de telle sorte que la poutre (8) de pare-chocs du véhicule ferme le conduit (11").

10. Ensemble de capteur de choc (25) de véhicule selon l'une quelconque des revendications 1 à 7, **caractérisé en ce que** le matériau absorbant (7"') est formé d'une première partie (7a"') et d'une seconde partie (7b"'), ces parties (7a"', 7b"') étant jointes ensemble de telle sorte que le conduit (11"') est formé à l'intérieur des parties (7a"', 7b"').

11. Procédé de détection d'une situation de choc au niveau d'un véhicule (1), le procédé comprenant l'étape consistant à :
(26) détecter une pression d'air dans un conduit (11) au moins partiellement formé dans un matériau absorbant (7) de pare-chocs de véhicule ; **caractérisé en ce qu'**il comprend également l'étape consistant à
(27) déterminer qu'une situation de choc s'est produite lorsque la pression d'air détectée augmente en premier lieu entre une pression d'air initiale (P₀) et une pression d'air maximale (P₁), puis diminue, tombant en dessous de la pression d'air initiale (P₀) jusqu'à une pression d'air minimale (P₂) avant d'augmenter à nouveau, par le fait d'au moins un passage d'air (14, 15, 16, 17) formé entre le conduit (11) et l'air ambiant.

12. Procédé selon la revendication 11, **caractérisé en ce qu'**il comprend l'activation d'au moins un ensemble de protection dans le véhicule (1).

13. Procédé selon l'une quelconque des revendications 11 et 12, **caractérisé en ce qu'**il comprend la détermination de caractéristiques de situation de choc au moyen de caractéristiques de pression en fonction du temps de la pression d'air détectée.

14. Procédé selon la revendication 13, **caractérisé en ce que** lesdites caractéristiques de situation de choc comprennent le type d'objet avec lequel la situation de choc s'est produite.
